**Europäisches Patentamt**

**European Patent Office**

**Office européen des brevets**

(19)

(11) Veröffentlichungsnummer : **0 319 818 B1**

(12) # EUROPÄISCHE PATENTSCHRIFT

(45) Veröffentlichungstag der Patentschrift :
08.05.91 Patentblatt 91/19

(51) Int. Cl.⁵ : **B01J 2/28, B01J 37/00**

(21) Anmeldenummer : 88119787.5

(22) Anmeldetag : 28.11.88

(54) Verfahren zum formgestalteten Agglomerierung von Feststoffpartikel (II).

(30) Priorität : 07.12.87 DE 3741337

(43) Veröffentlichungstag der Anmeldung :
14.06.89 Patentblatt 89/24

(45) Bekanntmachung des Hinweises auf die
Patenterteilung :
08.05.91 Patentblatt 91/19

(84) Benannte Vertragsstaaten :
AT BE CH DE ES FR GB GR IT LI LU NL SE

(56) Entgegenhaltungen :
DE-A- 2 351 120
FR-A- 1 255 593
FR-A- 2 261 063

(73) Patentinhaber : Henkel
Kommanditgesellschaft auf Aktien
Postfach 1100 Henkelstrasse 67
W-4000 Düsseldorf 1 (DE)

(72) Erfinder : Ritter, Wolfgang, Dr.
Am Bandenfeld 74
W-5657 Haan (DE)
Erfinder : Handwerk, Hans-Peter
Boschstrasse 57
W-4000 Düsseldorf 13 (DE)
Erfinder : Carduck, Franz-Josef, Dr.
Landstrasse 18
W-5657 Haan (DE)

EP 0 319 818 B1

## Beschreibung

Die Erfindung betrifft ein neues Verfahren zur formgestaltenden Agglomerierung von feinteiligen Feststoffpartikeln unter Mitverwendung von Bindemitteln erhöhter Thermostabilität sowie die Anwendung des neuen Agglomerationsverfahrens zur Herstellung von insbesondere rieselfähigen gekörnten Massen, die auf den verschiedenartigsten Einsatzgebieten Verwendung finden können.

Gegenstand der älteren EP-A-0290984 der Anmelderin ist ein solches Verfahren zur formgestaltenden Agglomerierung von Feststoffpartikeln unter Mitverwendung eines Bindemittels, wobei das Kennzeichen dieses älteren Vorschlages darin liegt, daß man zusammen mit den in einer Flüssigphase suspendierten Feststoffpartikeln polymere Bindemittel in der Flüssigphase gelöst mitverwendet, die zur Bildung unlöslicher Salze geeignete Säuregruppen aufweisen. Die Mischung aus Bindemittel, Flüssigphase und zu agglomerierenden Feststoffpartikeln wird zu einer pastös verformbaren Masse aufbereitet und diese Masse formgestaltet mit einer Lösung solcher Kationen vereinigt, die mit den Säuregruppen des polymeren Bindemittels zum unlöslichen Festkörper reagieren. Bevorzugt wird dabei mit wäßrigen bzw. wäßrig-organischen, miteinander mischbaren Flüssigphasen in beiden Reaktionskomponenten gearbeitet. Die den unlöslichen Zustand herbeiführende Salzbildung erfolgt wenigstens an der Oberfläche der formgestalteten pastösen Masse spontan beim Zusammenbringen der Formkörper mit der die fällenden Kationen enthaltenden Flüssigphase, beispielsweise durch Eintropfen der pastösen Masse in eine Lösung der fällenden Kationen.

Die vorliegende Erfindung will das allgemeine Arbeitsprinzip und die Lehre der älteren Anmeldung dahingehend weiterentwickeln, daß formgestaltete Agglomerate der zu agglomerierenden Feststoffteilchen mit erhöhter Thermostabilität erhalten werden können. Wichtig ist das insbesondere für alle solche Einsatzgebiete, bei denen die formgestalteten Agglomerate im Einsatz verschärften thermischen Bedingungen unterworfen werden und ihre vorbestimmte Formgestalt gleichwohl wenigstens hinreichend beibehalten sollen. Ein typisches Einsatzgebiet mit einem solchen Anforderungsprofil findet sich beispielsweise bei Katalysatormassen, die unter erhöhten Temperaturen zum Einsatz kommen sollen.

Die technische Lösung der erfindungsgemäßen Aufgabe knüpft an der im einschlägigen Fachwissen bekannten Tatsache an, daß sich cyclische Imidgruppen und insbesondere entsprechende Imidgruppierungen o-ständiger Dicarbonsäuren durch erhöhte Thermostabilität auszeichnen. Die Lehre der Erfindung benutzt diese Möglichkeit der Beeinflussung der Thermostabilität im Rahmen der Umwandlung einer zunächst löslichen, als Bindemittel fungierenden Polymermasse in den formgestalteten unlöslichen Zustand, indem sie die Vernetzung der Polymermasse mittels Imidgruppen enthaltender Brückenglieder vorsieht.

Gegenstand der Erfindung ist dementsprechend in einer ersten Ausführungsform ein Verfahren zur formgestaltenden Agglomerierung von feinteiligen, mit einer inerten nicht-wäßrigen Flüssigphase versetzten Feststoffpartikeln unter Mitverwendung eines Bindemittels, wobei dieses neue Verfahren jetzt dadurch gekennzeichnet ist, daß man als Bindemittel wenigstens anteilig in der Flüssigphase lösliche Polymere mit einem Gehalt von Dicarbonsäureanhydridgruppen einsetzt, daß man weiterhin Bindemittel, Flüssigphase und zu agglomerierenden Feststoff zu einer verformbaren Masse aufbereitet und diese formgestaltet derart mit Anhydrid-reaktiven Polyaminen vereinigt, das wenigstens an der Oberfläche der Formkörper die Polyamine mit den Anhydridgruppen abreagieren.

Es hat sich überraschenderweise gezeigt, daß nicht nur eine Salzbildungsreaktion im Sinne der eingangs genannten Lehre der älteren Anmeldung zur nahezu spontanen Verfestigung formgestalteter reaktiver Bindemittel enthaltender Formkörper geeignet ist, auch die Umsetzung von Dicarbonsäureanhydridgruppen in einem zunächst löslichen Polymeren mit Polyaminen, insbesondere primäre Aminogruppen enthaltenden Polyaminen, führt zu einer hinreichend raschen Vernetzung der Formkörperoberfläche, so daß ein unerwünschtes Verkleben der formgestaltet aufbereiteten Feststoffpartikel bei ihrer weiteren Handhabung ausgeschlossen werden kann.

Die Reaktion einer Dicarbonsäureanhydridgruppierung mit einer Aminogruppe, insbesondere einer primären Aminogruppe, verläuft bekanntlich stufenweise über Zwischenprodukte. In einer ersten Reaktionsstufe findet unter Aufspaltung des Anhydridringes die Bildung der Amidocarbonsäure statt, die in Gegenwart überschüssigen Amins in ihrer Carboxylgruppe zum entsprechenden Ammoniumsalz reagiert. Unter weiterführender thermischer Beanspruchung tritt dann die Rezyklisierungsreaktion unter Imidbildung ein. Hierbei wird Reaktionswasser und die gegebenenfalls vorliegende salzbildende Amingruppe abgespalten. Auch im erfindungsgemäßen Verfahren werden solche stufenweisen Reaktionszyklen ablaufen, wobei durch die Wahl der erfindungsgemäßen Verfahrensbedingungen sichergestellt ist, daß die hinreichende Verfestigung der pastös verformbaren Ausgangsmasse – die die zu agglomerierenden Feststoffpartikel enthält – schon in der ersten Reaktionsstufe der Umsetzung der Anhydridgruppierungen mit den Polyaminen mindestens unter Ausbildung von vernetzenden Polyamidocarbonsäuregruppen stattfindet. Ein in diesem Reaktionszustand ganz oder teilweise verfestigtes Agglomerat kann im Sinne des erfindungsgemäßen Handelns dem Agglomerationsverfah-

2

ren entnommen und beispielsweise dem beabsichtigten Einsatzzweck zugeführt werden. Es kann also beispielsweise eine auf diese Weise agglomerierte Katalysatormasse in diesem Zustand der Reaktorbefüllung zugeführt werden. Es kann dann zweckmäßig sein, in einer vorbereitenden Reaktionsphase die Umwandlung der Amidocarbonsäuregruppierungen zu zyklischen Imidgruppen in situ im Reaktor vorzusehen. Ebenso ist es aber natürlich möglich, den Endzustand der zyklisierenden Imidbildung und damit den Endzustand der vernetzenden Brückenglieder in den erfindungsgemäß hergestellten Agglomeraten im Rahmen des Agglomationsverfahrens mehrstufig oder gewünschtenfalls auch in einem Zuge vorzunehmen und dann das in seinem Endzustand angefallene Agglomerat dem beabsichtigten Einsatzzweck zuzuführen.

In einer bevorzugten Ausführungsform des erfindungsgemäßen Verfahrens wird derart gearbeitet, daß man die formgestaltete polymerhaltige Ausgangsmasse mit ihrem Gehalt an Dicarbonsäureanhydridgruppen im Polymer in eine Lösung der Polyamine in inerten, im wesentlichen wasserfreien Lösungsmitteln eingibt. Auch hier ist es bevorzugt, daß diese Lösungsmittel für die Polyamine mit der inerten Flüssigphase aus der formgestalteten polymerhaltigen Masse mischbar und insbesondere mit dieser identisch sind. Bevorzugte Lösungsmittel für die beiden Reaktanten sind polare organische Lösungsmittel, wie sie bei der Herstellung von Polyamidocarbonsäuren bzw. zyklischen Polyimiden im Stand der Technik bekannt sind. Als Lösungsmittel geeignet sind beispielsweise unter Reaktionsbedingungen flüssige N,N-Dialkylcarboxylamide, wobei die niedriger-molekularen Glieder dieser Klasse besonders bevorzugt sind. Beispiele hierfür sind das N,N-Dimethylformamid und N,N-Dimethylacetamid. Sie lassen sich leicht durch Abdampfen, Verdrängung oder Diffusion aus der Polyamidsäure und/oder dem geformten Gebilde entfernen. Andere typische Verbindungen dieser Lösungsmittelklasse sind N,N-Diethylformamid, N,N-Diethylacetamid und N,N-Dimethylmethoxyacetamid. Andere geeignete inerte organische polare Lösungsmittel sind beispielsweise Dimethylsulfoxid, N-Methyl-2-pyrrolidon, Pyridin, Dimethylsulfon, Hexamethylphosphoramid, Tetramethylensulfon und Dimethyltetramethylensulfon. Man kann diese Lösungsmittel alleine oder in Kombination mehrerer dieser Lösungsmittel oder auch in Kombination mit anderen Komponenten, beispielsweise Benzol, Benzonitril, Dioxan, Caprolacton, Xylol, Toluol und/oder Cyclohexan verwenden. In an sich bekannter Weise ist es zur hinreichenden Bildung von Amidocarbonsäuregruppierungen zweckmäßig, unter wasserfreien oder wenigstens weitgehend wasserfreien Bedingungen zu arbeiten. Zur einschlägigen Literatur wird beispielsweise verwiesen auf Journal of Polymer Science, Part C, 16 (1967), 1191-1209.

Das erfindungsgemäße Verfahren kennzeichnet sich in seiner Gesamtheit damit durch eine Mehrzahl von Teilschritten. Der erste Teilschritt sieht die folgenden Elemente vor :

Die zu agglomerierenden Wertstoffe werden in hinreichend feinverteilter Form zusammen mit einer Flüssigphase eingesetzt, in der diese Wertstoffe wenigstens anteilsweise und vorzugsweise wenigstens überwiegend nicht löslich sind, so daß die Ausbildung von wenigstens pastös verformbaren Feststoffsuspensionen möglich ist. Gleichzeitig wird ein polymeres Bindemittel mitverwendet, das in dieser ersten Verfahrensstufe in der ausgewählten Flüssigphase wenigstens anteilsweise löslich ist, dabei aber ganz bestimmte funktionelle Gruppen enthält, die in einfacher Weise die Überführung des löslichen Polymeren in den unlöslichen Zustand ermöglichen. Im Sinne der erfindungsgemäßen Lehre handele es sich hierbei um Dicarbonsäureanhydridgruppen, wobei insbesondere o-ständige Dicarbonsäureanhydridgruppen geeignet sind.

Das Mehrstoffgemisch aus Flüssigphase, gelöstem polymeren Bindemittel und darin verteilten bzw. suspendierten Feststoffen wird in die gewünschte Raumform der herzustellenden Agglomeratpartikel verformt. Dann werden diese Agglomerate der Einwirkung von Polyaminen ausgesetzt, die mit den Anhydridgruppen des polymeren Bindemittels zum unlöslichen Festkörper abreagieren. Es hat sich gezeigt, daß es zweckmäßig sein kann, durch Auswahl und Mitverwendung besonderes hoch reaktiver Aminogruppierungen zu einer so raschen Verfestigung zunächst der Außenbereiche des formgestaltenden Mehrkomponentenkörpers zu kommen, daß die hinreichende Stabilisierung der vorbestimmten Form und die Verhinderung des unerwünschten Zusammenbackens der Agglomeratteilchen sichergestellt werden können. Im Rahmen einer sich gewünschtenfalls anschließenden Nachreaktionsphase kann die stabiliserende und verfestigende Ausbildung der unlöslichen vernetzten Polymerverbindungen auch in tieferen Schichten der jeweiligen Formkörper sichergestellt werden bis hin zur durchdringenden Verfestigung des gesamten Materials.

Als hoch reaktive Aminogruppierung eignet sich insbesondere die aliphatische primäre Aminogruppe, so daß die wenigstens anteilsweise Mitverwendung aliphatischer primärer Polyamine im Polyaminreaktanten bevorzugt sein kann. Es ist auf der anderen Seite bekannt, daß aromatische Polyamine im fertigen Polyimidmolekül zu erhöhter Thermostabilität führen. Solche aromatisch substituierten primären Aminogruppen zeichnen sich jedoch häufig durch eine vergleichsweise langsame Reaktionsgeschwindigkeit mit der Dicarbonsäureanhydridgruppe aus. In den Rahmen der Erfindung fällt damit sowohl die Verwendung von aromatischen Polyaminen alleine, als auch insbesondere die kombinierte Anwendung eines Gemisches von aliphatischen und aromatischen Polyaminkomponenten. Die aliphatischen Polyaminkomponenten können eine hinreichende Verfestigung der Agglomeratform in einer ersten Reaktionsstufe sicherstellen, während die in die Masse eingetragenen aromatischen Polyamine mit noch vorhandenen reaktiven Anteilen des polymeren Bindemittels in späteren Verfahrensstufen unter Ausbildung besonders thermostabiler Imidgruppierungen abreagieren können.

Besonders geeignete Aminkomponenten sind diprimäre Amine aliphatischer und/oder aromatischer Natur. Geeignete Komponenten dieser Art sind insbesondere Verbindungen der allgemeinen Formel $H_2N$-R-$NH_2$, in der R einen divalenten organischen Rest mit wenigstens 2, vorzugsweise mit wenigstens 5 Kohlenstoffatomen bedeutet, und worin die beiden Aminogruppen an unterschiedlichen Kohlenstoffatomen des Restes R angreifen. Der Rest R ist insbesondere aliphatischer, cycloaliphatischer oder aromatischer Natur. Darüberhinaus kommen aber auch entsprechende Reste R in Betracht, die eine Kombination von aromatischen und aliphatischen Resten enthalten können, heterocyclische Reste, mit Brückengliedern versehene organische Reste, wobei die Brückenglieder insbesondere Sauerstoff, Stickstoff, Schwefel, Phosphor oder ein Silicium-organischer Rest sein können sowie Substituierungsprodukte der genannten Brückenglieder, beispielsweise entsprechende mit Sauerstoff substituierte Bindungselemente.

Die höchste Reaktionsfähigkeit gegenüber den cyclischen Carbonsäureanhydridgruppen besitzen im allgemeinen die aliphatischen und/oder cycloaliphatischen diprimären Diamine bzw. gemischt aliphatisch/aromatische Diamine, in denen die primären Aminogruppen als Substituenten an den aliphatischen Resten dieser gemischten Moleküle vorliegen. Zur raschen Abhärtung wenigstens der Außenflächen der formgestalteten Reaktionsmasse bei ihrer Umsetzung mit den Polyaminkomponenten kann es dementsprechend bevorzugt sein, wenigstens anteilsweise solche hochreaktiven Polyamine einzusetzen. Geeignete aliphatische Polyamine, insbesondere entsprechende diprimäre Diamine, enthalten im Rest R wenigstens 2 und bevorzugt wenigstens 5 Kohlenstoffatome, wobei die Obergrenze hier bei etwa 15 und bevorzugt bei etwa 12 Kohlenstoffatomen liegen kann. Geeignete diprimäre Diamine aliphatischer Natur sind dementsprechend insbesondere Hexamethylendiamin, Heptamethylendiamin, Octamethylendiamin, Nonamethylendiamin und/oder Decamethylendiamin. Anstelle geradkettiger und/oder verzweigter Kohlenstoffketten können auch entsprechende cycloaliphatische Amine von der Art des Cyclohexan-diamins vorliegen, wobei die Aminogruppen in 1,2-, 1,3- insbesondere aber in 1,4-Stellung vorliegen können. Entsprechend substituierte cycloaliphatische Amine, beispielsweise mit niederen Alkylresten substituierte cycloaliphatische Diamine, sind ebenso geeignet.

Erfindungsgemäß geeignete aromatische Polyamine können einen oder mehrere aromatische Reste aufweisen, wobei im Falle des Vorliegens mehrerer aromatischer Reste diese miteinander verschmolzen, in Kettenbindung unmittelbar miteinander verbunden oder aber über Kettenglieder – beispielsweise solche der genannten Art – miteinander verbunden sein können. Geeignete aromatische Komponenten sind beispielsweise :

m-Phenylendiamin, p-Phenylendiamin, 4,4'-Diamino-diphenylpropan, 4,4'-Diamino-diphenylmethan, Benzidin, 4,4'-Diamino-diphenylsulfid, 4,4'-Diamino-diphenylsulfon, 3,3'-Diamino-diphenylsulfon, 4,4'-Diamino-diphenylether, 2,6-Diamino-pyridin, bis-(4-Amino-phenyl)-diethylsilan, bis-(4-Amino-phenyl)-phosphinoxid, bis-(4-Amino-phenyl)-N-methylamin, 1,5-Diamino-naphthalin, 3,3'-Dimethyl-4,4'-diamino-diphenyl, 3,3'-Dimethoxy-benzidin, 2,4-bis(beta-Amino-t-butyl)-toluol, bis-(p-beta-Amino-t-butyl-phenyl)-ether, p-bis(2-Methyl-4-amino-pentyl)-benzol, p-bis-(1,1-Dimethyl-5-amino-pentyl)-benzol, m-Xylylendiamin, p-Xylylendiamin und ihre Gemische.

Weitere Beispiele für geeignete diprimäre Diamine sind 3-Methylheptamethylendiamin, 4,4-Dimethylheptamethylendiamin, 2,11-Diamino-dodecan, 1,2-bis-(3-Amino-propoxy)-ethan, 2,2-Dimethyl-propylen-diamin, 3-Methoxy-hexamethylendiamin, 2,5-Dimethylhexamethylendiamin, 2,5-Dimethylheptamethylendiamin, 5-Methylnonamethylen-diamin, 1,12-Diamino-octadecan, 2,5-Diamino-1,3,4-oxadiazol sowie die Verbindungen der chemischen Formeln

$$H_2N(CH_2)_3O(CH_2)_2O(CH_2)_3NH_2,$$

$$H_2N(CH_2)_3S(CH_2)_3NH_2,$$

$$H_2N(CH_2)_3N(CH_3)(CH_2)_3NH_2$$

sowie vergleichbare Verbindungen.

Als aminreaktive polymere Bindemittelkomponente mit einem Gehalt von Dicarbonsäureanhydridgruppen lassen sich alle entsprechenden Polymeren bzw. Copolymeren einsetzen, die sich durch einen hinreichenden Gehalt an Dicarbonsäureanhydridgruppen im Polymermolekül auszeichnen. Bevorzugt werden hier Polymerverbindungen eingesetzt, in denen die Bauelemente mit Dicarbonsäurehydridgruppen wenigstens etwa 10 mol-% und insbesondere wenigstens etwa 20 mol-% des Polymermoleküls ausmachen. Besonders geeignet sind hier polymere Bindemittel auf Basis von Maleinsäureanhydrid-Copolymeren, deren Gehalt an Maleinsäureanhydrid wenigstens etwa 25 mol-% und insbesondere etwa 30-70 mol-% ausmacht.

Es kann bevorzugt sein, als Comonomerkomponenten im polymeren Bindemittel neben dem Maleinsäureanhydrid vergleichsweise temperaturstabile Komponenten einzusetzen. Beispiele hierfür sind niedere alpha-Olefine, insbesondere Ethylen und/oder Propylen, aber auch Comonomere von der Art des Vinylmethylethers und vergleichbarer Verbindungen. Gute Ergebnisse im Sinne des erfindungsgemäßen Handelns werden beispielsweise beim Arbeiten mit Copolymerisaten auf Basis MAH/Ethylen 1 : 1 bzw. MAH/Vinylmethylether 1 : 1 erhalten. Verbindungen dieser Art sind als Handelsprodukte erhältlich. Verwiesen wird beispielsweise auf die unter dem Handelsnamen "EMA 21" bzw. "Gantrez AN 139" vertriebenen Produkte. Zusätzlich geeignet sind Copolymere von Maleinsäureanhydrid mit zumindest einem der folgenden Comonomeren : Essigsäureallylester, Acrylamid, Acrylsäuremethylester, Acrylnitril, 2-Buten, Cyclopenten, Cyclohexen, Cycloocten, Butylvinylether, Methylmethacrylat, N-Vinyl-phthimid, Propen, Styrol, Stilben, alpha-Methylstyrol, N-Vinyl-succinimid und Vinylacetat.

Das erfindungsgemäße Verfahren arbeitet mit zwei flüssigkeitshaltigen Phasen, die im Laufe des Verfahrens zu einem System vereinigt werden. Hierbei werden in den beiden zunächst getrennt gehaltenen Phasen insbesondere miteinander mischbare Flüssigkeiten eingesetzt, die bevorzugt im wesentlichen oder vollständig wasserfrei sind und im nachfolgenden mit dem vereinheitlichenden Begriff "Lösungsmittel" beschrieben werden, auch wenn es sich hierbei um unterschiedliche, jedoch bevorzugt miteinander mischbare Typen handelt und darüber hinaus ein essentieller Gedanke des erfindungsgemäßen Verfahrens ja gerade ist, daß die zu agglomerierenden feinteiligen Feststoffe selber in diesen Lösungsmitteln nicht oder nicht wesentlich löslich sind.

Im nachfolgenden wird zunächst die den zu agglomerierenden Feststoff und das polymere Bindemittel enthaltende mehrphasige Teilkomponente des erfindungsgemäßen Verfahrens beschrieben. Das zu agglomerierende Gut liegt im allgemeinen in Form von Pulvern oder als rieselförmiger Feststoff bzw. Feststoffgemisch vor, das im Lösungsmittel im wesentlichen unlöslich ist. Beispiele für solche Materialien sind etwa Metallpulver, unlösliche Metallverbindungen wie entsprechende Metalloxide oder Metallsulfide, unlösliche Metallsalze, zum Beispiel metallische Mischoxide und dergleichen. Es kann sich hierbei um Komponenten handeln, die als solche im Agglomerat den Wertstoff für die beabsichtigte Anwendung des Agglomerats besitzen oder aber dort auch erst in situ durch geeignete Reaktion – beispielsweise durch eine Reduktion oder Oxidation, eine Entwässerung und dergleichen – in den aktiven Wertstoff umgewandelt werden können.

Neben oder anstelle solcher anorganischer Komponenten können feinteilige, im Lösungsmittel unlösliche Feststoffe auf Basis von Kohlenstoff bzw. Kohlenstoffverbindungen im erfindungsgemäßen Verfahren agglomeriert werden. Ein besonders wichtiges Beispiel ist hier etwa Aktivkohle, die alleine – beispielsweise zur Herstellung von Aktivkohlebetten – oder zusammen mit metallischen und/oder anorganischen Komponenten der zuvor geschilderten Art Verwendung finden kann. Wichtige Anwendungsgebiete für diese zuletzt beschriebenen Kombinationen finden sich beispielsweise auf dem Gebiet der Katalysatorherstellung, insbesondere bei der vereinfachten Herstellung von gekörnten, rieselfähigen Katalysatoren. Das erfindungsgemäße Verfahren umfaßt aber auch die formgestaltende Agglomerierung von unlöslichen feinteiligen organischen Komponenten beliebiger Art unter den insgesamt milden und schonenden Verfahrensbedingungen des erfindungsgemäßen Verfahrens.

Typische Beispiele für Materialien, die im erfindungsgemäßen Verfahren aufbereitet werden können, finden sich auf den großen Gebieten der bekannten Adsorptionsmittel, der Ionenaustauscher und ganz allgemein von Trägermaterialien, die als sogenannte stationäre Phase mit den verschiedenartigsten Komponenten belegt sein können. Sehr häufig besteht auf den hier genannten Gebieten das Bedürfnis, fein- bzw. feinstteilige Materialien dieser Art natürlichen und/oder synthetischen Ursprungs zu agglomerieren, gleichwohl aber eine bevorzugte hochporöse Struktur der Agglomerate zur Verfügung zu stellen. Hier eröffnen sich durch die Erfindung neue Möglichkeiten.

Typische Adsorptionsmittel sind neben der bereits genannten Aktivkohle beispielsweise Verbindungen wie Eisenoxid, Magnesiumsilikate, Aluminiumoxide, Kieselgel, Aluminiumhydroxyd, Calciumhydroxyd, Calciumcarbonat, Calciumsulfat, Talk, sowie organische Komponenten von der Art Zucker, Stärke, Cellulosepulver und dergleichen. Auf dem Gebiet der Ionenaustauscher kommen entsprechende Materialien für den Kationenaustausch ebenso in Betracht wie für den Anionenaustausch. Zur erstgenannten Gruppe zählen beispielsweise Sulfonatharze, Carboxylatharze, Oxycellulose, Bleicherden, basische Oxide beispielsweise auf Basis Aluminiumoxid und/oder Kieselgel und dergleichen. Anionenaustauscher sind bekannte Harze mit quartären, tertiären und/oder primären Aminogruppen, saure Bleicherden, saures Aluminiumoxid und sogenannte saure Kohlensorten. Als Trägermaterial für stationäre Phasen seien beispielsweise genannt : Stärke, Cellulose, Kieselgel, Kieselgur, Gummipulver und dergleichen.

Geeignete, in den eingesetzten Lösungsmitteln lösliche, polymere Bindemittel der genannten Art mit ihrem Gehalt an Dicarbonsäureanhydridgruppierungen besitzen beispielsweise mittlere Molekulargewichte (Zahlenmittel Mn) von etwa 500 bis 5.000.000, insbesondere im Bereich von etwa 1.000 bis 500.000. Bevorzugte Bindemittelkonzentrationen liegen im hier besprochenen ersten Verarbeitungsschritt üblicherweise im Bereich von etwa 1 bis 30 Gew.-% und vorzugsweise im Bereich von etwa 1-20 Gew.-%, insbesondere etwa 2-10 Gew.-% – bezogen jeweils auf die pastös verformbare Masse aus Lösungsmittel, polymerem Bindemittel und zu agglomerierendem Feststoff – vor.

Die Konzentration des polymeren Bindemittels und sein mittleres Molekulargewicht beeinflussen die Viskosität des formgebend zu verarbeitenden Mehrstoffgemisches aus Lösungsmittel, polymerem Bindemittel und feinteiligen Feststoffen. Je nach der im folgenden noch zu schildernden Verfahrensmethodik kann die Viskosität des Mehrstoffgemisches in einem breiten Bereich gewählt werden. Geeignet sind beispielsweise Viskositäten der Feststoffaufschlämmungen im Bereich von etwa 100 bis 2.000.000 mPas. Als besonders geeignet haben sich fließfähige bis pastös verformbare Feststoffaufschlämmungen erwiesen, die auf etwa 20 bis 90 Gew.-% Lösungsmittel, etwa 1 bis 15 Gew.-% polymere Bindemittel und etwa 10 bis 60 Gew.-% feinteiliger Feststoffe enthalten, wobei jeweils die hier angegebenen Gewichtsprozente sich auf das 3-Stoffgemisch aus Lösungsmittel, polymerem Bindemittel und feinteiligem Feststoff beziehen.

Zur formgestaltenden Verarbeitung der Bindemittel und feinteiligen Feststoff enthaltenden Stoffgemische kommen insbesondere zwei Verfahrenstypen in Betracht :

In einer ersten Ausführungsform arbeitet man mit vergleichsweise dünnflüssigen Feststoffaufschlämmungen, deren Viskosität bevorzugt im Bereich von etwa 100 bis 4.000 mPas liegt. Fließfähige Massen dieser Art können nach hinreichender Homogenisierung durch Eintropfen dieses Mehrphasengemisches in eine Lösung der reaktiven Polyamine formgestaltet verfestigt werden. Je nach den im einzelnen gewählten Verfahrensbedingungen fallen dann in der Regel linsen- bis kugelförmige Reaktionskörper an, die ihre Formgestalt unmittelbar beim Eintreten in die Lösung der reaktiven Polyaminkomponenten annehmen und im weiteren Verfahrensverlauf im wesentlichen beibehalten. Je nach den gewählten Verfahrensbedingungen können dabei weitgehend gefüllte, gegebenenfalls aber auch hohlkugelartige Fällungsprodukte der geschilderten Art erhalten werden.

Das erfindungsgemäße Verfahrensprinzip läßt sich in einer zweiten Ausführungsform aber auch derart verwirklichen, daß vergleichsweise hochmolekulare Bindemittel und feinteilige Feststoffe enthaltende hochviskose Aufschlämmungen unter Einwirkung mechanischer Kräfte verformt und dann gewünschtenfalls nach einer Zerkleinerung in die polyaminenthaltende Fällösung eingetragen oder damit versetzt werden. So können beispielsweise fadenartige Stränge als solche oder nach vorheriger Zerkleinerung in eine Lösung der Polyamine eingebracht und dort über die Vernetzung des Bindemittels verfestigt werden. Gewünschtenfalls kann eine weiterführende Zerkleinerung des verfestigten Materials auch nach einer ersten Behandlung im bzw. mit dem Polyamine enthaltenden Fällbad erfolgen.

Die zur Vernetzung des polymeren Bindemittels in der eingangs dargestellten Form der Bildung von Amidocarbonsäuregruppen und/oder Imidgruppen eingesetzte zweite Reaktionskomponente ist die reaktive Polyamine enthaltende Lösung entsprechender Aminkomponenten. Die Verwendung bzw. Mitverwendung vergleichsweise hochreaktiver primärer Polyamine, insbesondere entsprechender aliphatischer diprimärer Diamine führt zu einer besonders raschen Vernetzung der formgestalteten Feststoffaufschlämmung wenigstens in den Außenbereichen, so daß es zweckmäßig sein kann, solche hochreaktiven Amine auf jeden Fall wenigstens in beschränkten Mengen in dem hier besprochenen zweiten Reaktanten mitzuverwenden. In diesem Sinne kann es beispielsweise bevorzugt sein, bei dem gemeinsamen Einsatz von aliphatischen und aromatischen Polyaminen Gemische solcher Verbindungen einzusetzen, die wenigstens etwa 5% und insbesondere etwa 5 bis 50% aliphatische Diamine – Gew.-% bezogen auf Amingemisch – enthalten.

Die Polyaminkomponente wird bevorzugt in vergleichsweise verdünnter Lösung eingesetzt, wobei Polyamingehalte im Lösungsmittel im Bereich von etwa 0,5 bis 25 Gew.-% und bevorzugt im Bereich von etwa 1 bis 10 Gew.-% besonders geeignet sind – Gew.-% jeweils bezogen auf die eingesetzte Polyaminlösung.

Als Reaktionstemperatur für die Umsetzung der beiden erfindungsgemäß eingesetzten Reaktionspartner bieten sich insbesondere Temperaturen an, die ein einfaches Arbeiten in der Praxis ermöglichen. So kommt insbesondere der Temperaturbereich von etwa Raumtemperatur bis maximal zur Siedetemperatur unter Reaktionsbedingungen einer der Reaktionskomponenten, insbesondere der Temperaturbereich von etwa Raumtemperatur bis 100°C in Betracht. Es kann dabei bevorzugt sein, die Vereinigung der formgestalteten polymerhaltigen Masse mit der Polyaminlösung bei Raumtemperatur oder nur mäßig erhöhten Temperaturen vorzunehmen und dann bevorzugt das mehrphasige Reaktionsgemisch in Gegenwart der Flüssigphase einer Nachreaktion zu unterwerfen. Diese Nachreaktion kann gewünschtenfalls unter mäßiger Bewegung durchgeführt werden. Man kann die formgestaltete polymerhaltige Komponente in die Lösung der Polyaminkomponente eingeben – beispielsweise durch Eintropfen – und dabei mit einem solchen Überschuß an inertem Lösungsmittel arbeiten, daß die Formkörper als disperse Phase in einer im wesentlichen aus inertem Lösungsmittel gebildeten geschlossenen Flüssigphase vorliegen. Die hinreichend verfestigten Formkörper werden dann vom Lösungsmittel abgetrennt, gewünschtenfalls gewaschen und getrocknet, und entweder der Verwendung zugeführt oder auch einer Nachreaktion bei bevorzugt erhöhten Temperaturen unterworfen. Diese Nachreaktion kann dabei insbesondere unter solchen Bedingungen durchgeführt werden, daß unter gleichzeitiger Ausbildung von Vernetzungen mittels Imidgruppen restliches Lösungsmittel, Reaktionswasser und gegebenenfalls vorliegender Polyaminüberschuß ausgetrieben werden. Es hat sich gezeigt, daß in dieser Form insbesondere Einfluß auf die Porosität der Festkörperstruktur genommen werden kann. Die dabei schließlich anfallenden agglomerierten Festkörper zeichnen sich, wie elektronenmikroskopische Untersuchung der Partikel zeigen, durch eine durchgängige Porosität des Festkörpermaterials aus. Es ist sofort einleuchtend, daß hierdurch für viele Anwendungszwecke besonders geeignete Materialien geschaffen werden können.

In einer wichtigen Ausführungsform des erfindungsgemäßen Handelns werden die primär bei Raumtemperatur oder nur mäßig erhöhten Temperaturen, insbesondere unterhalb 100°C verfestigten und dann gewaschenen und gewünschtenfalls getrockneten Agglomerate einer nachträglichen Temperaturbehandlung bei wenigstens etwa 100°C unterworfen. Spätestens in diesem Zustand läßt sich dann das Vorliegen von Imidvernetzungen in ansich bekannter Weise – beispielsweise mittels IR-Spektralanalyse – nachweisen. Gleichzeitig bildet sich auch eine erwünschte Durchlässigkeit bzw. offenporige Struktur auch der Außenbereiche des jeweiligen Formkörpers aus. Die Temperaturbehandlung kann an der Luft oder auch unter Inertgas erfolgen. Sie kann weiterhin an dem gewaschenen – gewünschtenfalls aber auch an dem nicht gewaschenen oder nur beschränkt gewaschenen – Gut erfolgen.

In einer Ausführungsform der Erfindung werden die verfestigten Formkörper vor der abschließenden Temperaturbehandlung mit Ammoniak, insbesondere mit verdünnter wäßriger Ammoniaklösung, behandelt. Hierdurch kann Einfluß auf die Aktivität der letztlich erhaltenen Formkörper im Sinne einer Aktivitätssteigerung genommen werden.

Für bestimmte Einsatzzwecke kann eine zusätzliche Modifikation der Oberfläche der verfestigten Formkörper zweckmäßig sein. So kann es wünschenswert sein, durch eine einfache mechanische Behandlung die Oberfläche so aufzurauhen, daß sie der porigen Gesamtstruktur des entstandenen Agglomerates optimal angepaßt ist. Geeignet ist hier beispielsweise das einfache Walzen bzw. Rollen eines korn- bzw. kugelförmig angefallenen Feststoffgutes in Masse, wobei es nur eines minimalen Abriebes auf der Kornoberfläche bedarf, um den unmittelbaren Zutritt zur porigen Innenstruktur des Korns bzw. der Kugeln in gewünschtem Ausmaß zu eröffnen.

Das erfindungsgemäße Verfahren erlaubt die Herstellung von Agglomeraten üblicher Teilchengrößen, beispielsweise die Herstellung von rieselfähigen gekörnten Massen mit durchschnittlichen Korngrößen im Bereich von etwa 0,5 bis 15 mm, insbesondere im Bereich von etwa 1 bis 10 mm und bevorzugt im Bereich von etwa 2 bis 7 mm. Einsetzbar sind für die Gewinnung dieser Agglomerate feinpulvrige Ausgangsmaterialien, deren ursprüngliche Korngröße praktisch beliebig fein sein kann. Spezielle Beispiele für solche zu agglomerierenden feinteiligen Feststoffe leiten sich aus dem beabsichtigten Einsatzzweck der erfindungsgemäß hergestellten Formlinge ab. Bedeutung besitzen hier typische Katalysatorkomponenten, beispielsweise unlösliche Verbindungen bzw. feinpulvrige Metalle auf Basis Platin, Palladium, Rhodium, Nickel, in Abwesenheit oder in Gegenwart von Trägern wie Aktivkohle, Kieselgur, aber auch Aluminiumoxid, Calciumcarbonat und dergleichen. Oxidische Katalysatorkomponenten, beispielsweise von der Art des Kupferchromits, sind für die Verarbeitung nach dem erfindungsgemäßen Verfahren besonders geeignet. Ein anderes Beispiel sind Silikat-haltige Formlinge, etwa Alumosilikate wie Zeolithe enthaltende Massen.

Nach einer bevorzugten Ausführungsform der Erfindung wird das Verfahren zur Agglomerierung von Aktivkohle bzw. Aktivkohle-enthaltenden Stoffgemischen zu entsprechenden, beispielsweise Schwermetalle enthaltenden Katalysatoren in Kornform eingesetzt.

Nachfolgend wird zunächst die Herstellung von Formlingen im Sinne der Erfindung ohne die Mitverwendung von Wertstoffen geschildert. Die anschließenden erfindungsgemäßen Beispiele beschreiben dann praktische Ausführungsformen für die Agglomerierung von Wertstoffen nach dem erfindungsgemäßen Verfahren.

## Vorversuche

In Vorversuchen werden zunächst ungefüllte vernetzte Formlinge wie folgt hergestellt :
Maleinsäureanhydrid-Copolymerisate des Handels – Ethylen/Maleinsäureanhydrid (1 : 1) 2 Typ "EMA 21" (Monsanto) bzw. Vinylmethylether/Maleinsäureanhydrid (1 : 1) Typ "Gantrez AN 139" (GAF) – werden in Dimethylformamid (10 Gew.-%ige Lösung) gelöst. Getrennt davon wird eine 5 Gew.-%ige Lösung von 1,6-Hexamethylendiamin (HMDA) in Dimethylformamid hergestellt.

Zur Bildung der Formkörper wird die Polymerlösung bei Raumtemperatur durch ein V4A-Sieb (Bohrung ∅ 2 mm) in 5%ige Diaminlösung in Dimethylformamid getropft.

Zur Verfestigung der erhaltenen Formkörper werden diese für den Zeitraum von einer Stunde im Fällbad (HMDA-DMF) gelagert. Anschließend werden die im Fällbad gelagerten Formkörper abfiltriert und nach verschiedenen Methoden behandelt und isoliert :

A1 : mit destilliertem Wasser auf einer Glassinternutsche neutral gewaschen (pH 7,0) und bei Raumtemperatur an der Luft getrocknet.

A2 : mit destilliertem Wasser auf einer Glassinternutsche neutral gewaschen (pH 7,0) und 24 Stunden bei 125°C getrocknet.

A3 : mit destilliertem Wasser auf einer Glassinternutsche neutral gewaschen (pH 7,0) und 16 Stunden bei 200°C getrocknet.

A4 : mit destilliertem Wasser auf einer Glassinternutsche neutral gewaschen (pH 7,0), 24 Stunden bei 125°C getrocknet und anschließend 5 Stunden unter $N_2$-Atmosphäre bei 300°C getempert.

Zur Charakterisierung der gebildeten Formkörper wird das gebildete Material im IR-Spektrum auf das Vorliegen der charakteristischen Imidbanden (1770 bzw. 750 Wellenzahlen/($cm^{-1}$)) geprüft.

Weiterhin wird die Zersetzungstemperatur an pulverisiertem Formlingsmaterial mittels Thermogravimetrie bestimmt (Thermalanalyzer 990/Fa. Du Pont, Aufheizrate : 20°C/Min.).

Schließlich wird die Härte der Formkörper mit dem Meßgerät für Tabletten-Druckfestigkeit "Modell 4M" der Firma Dr. Schleuniger Productronic AG. bestimmt. Gemessen wird bei konstanter und definierter Belastungsgeschwindigkeit von 20 N/Sek. durch geregelten Antrieb (Meßbereich : 5-300 N).

Den Eigenschaften der gebildeten Formkörper gemäß den vorherigen Angaben zu A1-A4 sind in der nachfolgenden Tabelle I zusammengefaßt.

8

Tabelle I

Eigenschaften der Formkörper

| Bez. | Trocknungs-temperatur | Imidsignal bei 1770 und 750 Wellenzahlen | Abdampfen eines flüchtigen, nicht polymergebunde-nen Anteils im Temperaturbereich | Zersetzungs-temperatur | Festigkeit bei Raumtemperatur |
|---|---|---|---|---|---|
| A1 | Raumtemperatur | negativ | 100 – 225 $^{o}$C | ca. 300 $^{o}$C | 15 N |
| A2 | 125 $^{o}$C | positiv | 250 – 300 $^{o}$C | ca. 450 $^{o}$C | 40 N |
| A3 | 200 $^{o}$C | positiv | 300 $^{o}$C | 450 – 470 $^{o}$C | 25 N |
| A4 | 300 $^{o}$C | positiv | 350 – 400 $^{o}$C | 450 – 470 $^{o}$C | 3 N |

EP 0 319 818 B1

In den nachfolgenden Beispielen der Erfindung werden unter Benutzung dieser Verfahrensmethodik mit Wertstoffen gefüllte agglomerierte Formkörper hergestellt und auf ihre Eigenschaften hin untersucht.

**Beispiele**

Allgemeine Herstellvorschrift

Das jeweilige MAH-Copolymere wird in Dimethylformamid gelöst. In diese Lösung werden die nachfolgend aufgeführten in Dimethylformamid unlöslichen Wertstoffe eingerührt.

Aktivkohle, Fa. Degussa

Kupferchromit

Nickel/SiO$_2$, Typ E480P, Calsicat Division Mallinckrodt, Inc.

Zeolithe

Zeolith NaMI. Fa. Norton, England.

Nach ausreichender Dispergierung wird der angefallene Slurry in eine 5%ige HMDA-Lösung in Dimethylformamid getropft. Zur Verfestigung der erhaltenen Formkörper werden diese für 1 Stunde im Fällbad (HMDA/DMF) gelagert. Anschließend werden die Formkörper über eine Glassinternutsche abgesaugt und mit destilliertem Wasser neutral gewaschen (pH 7,0). Zur Ausbildung der Imidstruktur wird nachfolgend das gekörnte Gut bei 125°C für den Zeitraum von 24 Stunden behandelt.

In den nachfolgenden Tabellen II-IV sind die folgenden Werte zusammengestellt :

Zusammensetzung der Ausgangsslurries (Polyanhydrid, Wertstoff mit Lösungsmittel auf 100%)

Art der Formlingnachbehandlung

Formlingseigenschaften

## Tabelle II

### Aktivkohle Formkörper

| Beispiel | Polymer | Gew.-% | Wertstoff | Gew.-% | Nachbehandlung | Festigkeit N bei Raumtemperatur | Innere Struktur der Formlinge offenporig |
|---|---|---|---|---|---|---|---|
| 1 | Gantrez | 2,3 | A-Kohle | 30 | --- | 15 | + |
|   | AN 139 | 2,3 | A-Kohle | 30 | 30 min gewalzt | 15 | + |
|   |   | 2,3 | A-Kohle | 30 | $NH_3$-Behandlung | 22 | + |
|   |   | 2,3 | A-Kohle | 30 | 3 h 220 $^{\circ}$C | 10 | + |
| 2 | Gantrez | 3,4 | A-Kohle | 30 | --- | 20 | + |
|   | AN 139 | 3,4 | A-Kohle | 30 | 30 min gewalzt | 25 | + |
|   |   | 3,4 | A-Kohle | 30 | $NH_3$-Behandlung | 30 | + |
|   |   | 3,4 | A-Kohle | 30 | 3 h 220 $^{\circ}$C | 8 | + |
| 3 | Gantrez | 4,8 | A-Kohle | 29 | --- | 40 | + |
|   | AN 139 | 4,8 | A-Kohle | 29 | 30 min gewalzt | 40 | + |

EP 0 319 818 B1

Tabelle II (Fortsetzung)

| Beispiel | Polymer | Gew.-% | Wertstoff | Gew.-% | Nachbehandlung | Festigkeit N bei Raumtemperatur | Innere Struktur der Formlinge offenporig |
|---|---|---|---|---|---|---|---|
| 4 | Gantrez | 5,8 | A-Kohle | 35 | --- | 40 | + |
|  | AN 139 | 5,8 | A-Kohle | 35 | 30 min gewalzt | 35 | + |
|  |  | 5,8 | A-Kohle | 35 | reduziert | 10 | + |
| 5 | Gantrez | 10 | A-Kohle | 25 | --- | 30 | + |
|  | AN 139 | 10 | A-Kohle | 25 | 30 min gewalzt | 30 | + |
| 6 | EMA 21 | 6,6 | A-Kohle | 27,4 | --- | 20 | + |
|  |  | 6,6 | A-Kohle | 27,4 | 30 min gewalzt | 20 | + |
|  |  | 6,6 | A-Kohle | 27,4 | $NH_3$-Behandlung | 20 | + |
| 7 | EMA 21 | 9 | A-Kohle | 27 | --- | 25 | + |
|  |  | 9 | A-Kohle | 27 | 30 min gewalzt | 25 | + |
|  |  | 9 | A-Kohle | 27 | $NH_3$-Behandlung | 30 | + |

EP 0 319 818 B1

Tabelle III

Kupfer-Chromit-Formkörper

| Beispiel | Polymer | Gew.-% | Wertstoff | Gew.-% | Nachbehandlung | Festigkeit N bei Raumtemperatur | Eigenschaft der Formlinge innere Struktur innere Struktur | offenporig |
|----------|---------|--------|-----------|--------|----------------|---------------------------------|-----------------------------------------------------------|------------|
| 8 | Gantrez | 4 | Cu-Chromit | 36 | --- | 40 | | + |
| | AN 139 | 4 | Cu-Chromit | 36 | 30 min gewalzt | 40 | | + |
| 9 | Gantrez | 6,8 | Cu-Chromit | 33 | --- | 40 | | + |
| | AN 139 | 6,8 | Cu-Chromit | 33 | 30 min gewalzt | 40 | | + |

EP 0 319 818 B1

T a b e l l e  IV

Verschiedene Wertstoffe

| Beispiel | Polymer | Gew.-% | Wertstoff | Gew.-% | Festigkeit N bei RT |
|----------|---------|--------|-----------|--------|---------------------|
| 10 | Gantrez AN 139 | 3,6 | SASIL | 50,0 | 30 |
| 11 | Gantrez AN 139 | 6,2 | $Ni/SiO_2$ | 36,6 | 10 |
| 12 | Gantrez AN 139 | 6,7 | $Ni/SiO_2$ | 33,0 | 18 |
| 13 | Gantrez AN 139 | 10,0 | Zeolithe Fe/Z/C [1] | 25,0 | 30 |
| 14 | Gantrez AN 139 | 10,0 | Zeolithe Na-MI [1] | 25,0 | 35 |
| 15 | EMA 21 | 6,0 | $Ni/SiO_2$ | 40,0 | 5 |

[1]: Fa. Norton, England

EP 0 319 818 B1

Die in diesen Beispielen angegebenen Nachbehandlungen der Formkörper dienen der Oberflächenaktivierung. Sie führen zu einer Kornstruktur auch in der Außenfläche, die den ungehinderten Zutritt zur offenporigen Innenstruktur ermöglicht. Es werden zur Nachbehandlung die folgenden Verfahren angewendet :

1. Ammoniak-Behandlung :

Die Formkörper werden in einer 0,1%igen wäßrigen Ammoniaklösung für 5 Min. getaucht, anschließend über eine Glassinternutsche abgesaugt, mit destilliertem Wasser gewaschen und 24 Stunden bei 125°C getrocknet.

2. mechanische Behandlung (Walzen) :

Die Formkörper werden in einer Glasflasche 30 Min. – 2 Std. auf einer Rollbank gewalzt und anschließend durch Absieben der Staubanteile isoliert.

3. Temperung :

Die Formkörper werden in einer Porzellanschale unter Luft 3 Std. bei 230°C bzw. in einem verschlossenen Reagenzglas unter Stickstoff 3 Std. bei 300°C getempert.

Im visuellen Eindruck verändern sich die ursprünglich glänzenden Formkörperoberflächen durch die Nachbehandlung zum "matt-porösen" Zustand.

Raster-elektronenmikroskopische Aufnahmen bestätigen den grob visuellen Eindruck. Die Nachbehandlung schafft den ungehinderten Zutritt zur offenporigen Innenstruktur durch die Oberflächenbereiche hindurch, auch dann, wenn ursprünglich hier Verkrustungserscheinungen aufgetreten sind.

In den nachfolgenden Beispielen wird die Vernetzung der Formkörper (Aktivkohle als Wertstoff) mit einem anderen diprimären Diamin (Octamethylendiamin) bzw. einem Amingemisch (m-Phenylendiamin/HMDA 1 : 1) vorgenommen und mit dem entsprechenden HMDA-vernetzten Produkt verglichen.

## Tabelle V

| Beispiel | Polymer | Gew.-% | Wertstoff | Gew.-% | Diamin 5 %ig in DMF | Festigkeit N bei RT |
|---|---|---|---|---|---|---|
| 16 | Gantrez AN 139 | 4,8 | A-Kohle | 29 | Hexamethylendiamin | 30 |
| 17 | Gantrez AN 139 | 4,8 | A-Kohle | 29 | Octanmethylendiamin | 25 |
| 18 | Gantrez AN 139 | 5,0 | A-Kohle | 31 | m-Phenylendiamin/ Hexamethylendiamin (1:1) | 30 |

EP 0 319 818 B1

**Ansprüche**

1. Verfahren zur formgestaltenden Agglomerierung von feinteiligen, mit einer inerten nicht-wässrigen Flüssigphase versetzten Feststoffpartikeln unter Mitverwendung eines Bindemittels, dadurch gekennzeichnet, daß man als Bindemittel wenigstens anteilig in der Flüssigphase lösliche Polymere mit einem Gehalt von Dicarbonsäureanhydridgruppen einsetzt, daß man weiterhin Bindemittel, Flüssigphase und zu agglomerierenden Feststoff zu einer verformbaren Masse aufbereitet und diese formgestaltet derart mit Anhydrid-reaktiven Polyaminen vereinigt, daß wenigstens an der Oberfläche der Formkörper die Polyamine mit den Anhydridgruppen abreagieren.

2. Verfahren nach Anspruch 1, dadurch gekennzeichnet, daß man die formgestaltete polymerhaltige Masse in eine Lösung der Polyamine in inerten, im wesentlichen wasserfreien Lösungsmitteln eingibt, wobei bevorzugt diese Lösungsmittel mit der inerten Flüssigphase der polymerhaltigen Masse mischbar und insbesondere mit dieser identisch sind, wobei bevorzugt polare organische Lösungsmittel in beiden Reaktionsbestandteilen verwendet werden.

3. Verfahren nach Ansprüchen 1 und 2, dadurch gekennzeichnet, daß man Polymere mit einem Gehalt an 5-gliedrigen Dicarbonsäureanhydridgruppen als Amin-reaktives Bindemittel einsetzt, wobei diese Dicarbonsäureanhydridgruppen bevorzugt wenigstens 10 mol-%, insbesondere wenigstens etwa 20 mol-% des Polymermoleküls ausmachen.

4. Verfahren nach Ansprüchen 1 bis 3, dadurch gekennzeichnet, daß als polymere Bindemittel Maleinsäureanhydrid-Copolymere, bevorzugt mit einem Gehalt von wenigstens etwa 25 mol-% Maleinsäureanhydrid eingesetzt werden, die insbesondere temperaturstabile Strukturelemente entsprechender Comonomerer wie niedere alpha-Olefine im Kettenverlauf enthalten.

5. Verfahren nach Ansprüchen 1 bis 4, dadurch gekennzeichnet, daß man als Polyamine entsprechende Verbindungen mit primären Aminogruppen, insbesondere wenigstens anteilig diprimäre aliphatische und/oder aromatische Diamine einsetzt, wobei Gemischen von aliphatischen und aromatischen Diaminen besondere Bedeutung zukommen kann, die wenigstens etwa 5%, insbesondere 5 bis 50% aliphatische Diamine – Gewichtsprozent bezogen auf Amingemisch – enthalten.

6. Verfahren nach Ansprüchen 1 bis 5, dadurch gekennzeichnet, daß die Polyaminkomponente in verdünnter Lösung eingesetzt wird, wobei der Polyamingehalt im Lösungsmittel bevorzugt im Bereich von 0,5 bis 25 Gew.-%, bevorzugt von 1 bis 10 Gew.-% – bezogen auf eingesetzte Polyaminlösung – liegt.

7. Verfahren nach Ansprüchen 1 bis 6, dadurch gekennzeichnet, daß man die Vereinigung der formgestalteten polymerhaltigen Masse mit der Polyaminlösung bei Raumtemperatur oder nur mäßig erhöhten Temperaturen vornimmt und bevorzugt das mehrphasige Reaktionsgemisch einer Nachreaktion, gewünschtenfalls unter mäßiger Bewegung, unterwirft.

8. Verfahren nach Ansprüchen 1 bis 7, dadurch gekennzeichnet, daß man die formgestaltete polymerhaltige Komponente in die Lösung der Polyaminkomponente eingibt – z.B. eintropft – und dabei mit einem solchen Überschuß an inertem Lösungsmittel arbeitet, daß die Formkörper als disperse Phase in einer im wesentlichen aus inertem Lösungsmittel gebildeten geschlossenen Flüssigphase vorliegen.

9. Verfahren nach Ansprüchen 1 bis 8, dadurch gekennzeichnet, daß die verfestigten Formkörper vom Lösungsmittel abgetrennt, gewünschtenfalls gewaschen und getrocknet und einer Nachreaktion bei bevorzugt erhöhten Temperaturen unterworfen werden.

10. Verfahren nach Ansprüchen 1 bis 9, dadurch gekennzeichnet, daß die Nachreaktion unter Bedingungen durchgeführt wird, bei denen unter gleichzeitiger Ausbildung von Vernetzungen mittels Imidgruppen restliches Lösungsmittel, Reaktionswasser und gegebenenfalls vorliegender Polyaminüberschuß ausgetrieben und dabei eine poröse Gesamtstruktur, insbesondere auch in den Außenbereichen der Formkörper, ausgebildet wird.

11. Verfahren nach Ansprüchen 1 bis 10, dadurch gekennzeichnet, daß die gewaschenen und gewünschtenfalls getrockneten Formkörper einer Temperaturbehandlung bei wenigstens etwa 100°C unterworfen werden, die auch unter Inertgas vorgenommen werden kann.

12. Verfahren nach Ansprüchen 1 bis 11, dadurch gekennzeichnet, daß die Formkörper vor der Temperaturbehandlung mit Ammoniak bevorzugt mit verdünnter wäßriger Ammoniaklösung behandelt werden.

13. Verfahren nach Ansprüchen 1 bis 12, dadurch gekennzeichnet, daß man als zu agglomerierendes unlösliches Gut pulver bis rieselfähige Feststoffe bzw. Feststoffgemische z.B. auf Basis Metallpulver, unlösliche Metallverbindungen wie Metalloxide, -sulfide, unlösliche Metallsalze und/oder Aktivkohle einsetzt.

14. Verfahren nach Ansprüchen 1 bis 13, dadurch gekennzeichnet, daß wasserlösliche polymere Bindemittel mit mittleren Molekulargewichten (Mn) von 500 bis 5000000, insbesondere von 1000 bis 500000 eingesetzt werden, wobei Festkörpergehalte des polymeren Bindemittels – bezogen auf die verformbare und zu verfestigende Masse – im Bereich von 1 bis 20 Gew.-%, vorzugsweise von 2 bis 10 Gew.-% bevorzugt sein können.

15. Verfahren nach Ansprüchen 1 bis 14, dadurch gekennzeichnet, daß Feststoffaufschlämmungen einer Viskosität im Bereich von 100 bis 2 Mio mPas eingesetzt werden.

16. Verfahren nach Ansprüchen 1 bis 15, dadurch gekennzeichnet, daß man vergleichsweise dünnflüssige Feststoffaufschlämmungen (bevorzugte Viskosität im Bereich von 100 bis 4000 mPas) durch Eintropfen in die Lösung der reaktiven Polyamine formgestaltet verfestigt, während höher viskose Massen durch Einwirkung mechanischer Kräfte – z.B. durch Extrusion – formgestaltet und mit der polyaminhaltigen Reaktionslösung vereinigt, z.B. in diese eingetragen werden.

17. Verfahren nach Ansprüchen 1 bis 16, dadurch gekennzeichnet, daß man die Oberfläche des formgestaltet verfestigten Gutes durch mechanische und/oder chemische Behandlung modifiziert, insbesondere aufrauht.

18. Verfahren nach Ansprüchen 1 bis 17, dadurch gekennzeichnet, daß man das korn- bzw. kugelförmig verfestigte Gut in Masse kurzfristig rollt.

19. Anwendung des formgestaltenden Agglomerationsverfahrens nach Ansprüchen 1 bis 18 zur Herstellung von rieselfähigen gekörnten Massen mit durchschnittlichen Korngrößen im Bereich von 1 bis 20 mm, vorzugsweise 2 bis 10 mm aus einem feinpulverigen Einsatzmaterial.

20. Anwendung nach Anspruch 19, dadurch gekennzeichnet, daß das Verfahren zur Agglomerierung von Aktivkohle oder zur Ausbildung von porösen Katalysatormassen in Korn- bzw. Granulatform eingesetzt wird.

## Claims

1. A process for the shaping agglomeration of finely divided particulate solids suspended in an inert, non-aqueous liquid phase using a binder, characterized in that the binders used are polymers which are at least partly soluble in the liquid phase and which contain dicarboxylic anhydride groups and in that the binder, liquid phase and solid to be agglomerated are worked up into a formable mass which is then combined in shaped form with anhydride-reactive polyamines in such a way that the polyamines react off with the anhydride groups at least at the surface of the shaped agglomerates.

2. A process as claimed in claim 1, characterized in that the shaped polymer-containing mass is introduced into a solution of polyamines in inert, substantially anhydrous solvents, the solvents preferably being miscible and, in particular, identical with the inert liquid phase of the polymer-containing mass, polar organic solvents preferably being used in both reaction components.

3. A process as claimed in claims 1 and 2, characterized in that polymers containing 5-membered dicarboxylic anhydride groups are used as amine-reactive binder, these dicarboxylic anhydride groups preferably making up at least 10 mol% and more especially at least about 20 mol% of the polymer molecule.

4. A process as claimed in claims 1 to 3, characterized in that the polymeric binder used is a maleic anhydride copolymer, preferably containing at least about 25 mol-% maleic anhydride, which contains in particular temperaturestable structural elements of corresponding comonomers, such as lower alpha-olefins, in the chain.

5. A process as claimed in claims 1 to 4, characterized in that the polyamines used are corresponding compounds containing primary amino groups, more especially at least partly diprimary aliphatic and/or aromatic diamines, particular significance being attributed to mixtures of aliphatic and aromatic diamines which contain at least about 5% and more especially 5 to 50% aliphatic diamines (% by weight, based on amine mixture).

6. A process as claimed in claims 1 to 5, characterized in that the polyamine component is used in dilute solution, the polyamine content of the solvent preferably being in the range from 0.5 to 25% by weight and more preferably in the range from 1 to 10% by weight, based on the polyamine solution used.

7. A process as claimed in claims 1 to 6, characterized in that the shaped, polymer-containing mass is combined with the polyamine solution at room temperature or only moderately elevated temperatures and the multiphase reaction mixture is preferably subjected to an after-reaction, if desired with moderate stirring.

8. A process as claimed in claims 1 to 7, characterized in that the shaped polymer-containing component is introduced, for example dropwise, into a solution of the polyamine component using such an excess of inert solvent that the shaped agglomerates are present as disperse phase in a continuous liquid phase consisting essentially of inert solvent.

9. A process as claimed in claims 1 to 8, characterized in that the solidified shaped agglomerates are separated off from the solvent, if desired washed and dried and subjected to an after-reaction at preferably elevated temperatures.

10. A process as claimed in claims 1 to 9, characterized in that the after-reaction is carried out under conditions under which residual solvent, water of reaction and any excess polyamine present are removed with simultaneous formation of crosslinkages by means of imide groups, a porous overall structure being formed, in particular even in the outer regions of the shaped agglomerates.

11. A process as claimed in claims 1 to 10, characterized in that the washed and, if desired, dried shaped agglomerates are subjected to a heat treatment at at least about 100°C which may even be carried out in an inert gas atmosphere.

12. A process as claimed in claims 1 to 11, characterized in that, before the heat treatment, the shaped agglomerates are treated with ammonia, preferably in the form of a dilute aqueous ammonia solution.

13. A process as claimed in claims 1 to 12, characterized in that powder-form free-flowing solids or mixtures thereof, for example based on metal powders, insoluble metal compounds, such as metal oxides, metal sulfides, insoluble metal salts and/or active carbon, are used as the insoluble material to be agglomerated.

14. A process as claimed in claims 1 to 13, characterized in that water-soluble polymeric binders having average molecular weights (Mn) of from 500 to 5,000,000 and more especially from 1,000 to 500,000 are used, the polymeric binder having solids contents (based on the formable mass to be solidified) of from 1 to 20% by weight and preferably from 2 to 10% by weight.

15. A process as claimed in claims 1 to 14, characterized in that solids suspensions having a viscosity of from 100 to 2,000,000 mPa.s are used.

16. A process as claimed in claims 1 to 15, characterized in that comparatively thin-flowing solids suspensions (preferred viscosity in the range from 100 to 4,000 mPa.s) are solidified in shaped form by dropwise addition to the solution of the reactive polyamines while masses of relatively high viscosity are shaped by the action of mechanical forces, for example by extrusion, and combined with the polyamine-containing reaction solution, for example added dropwise thereto.

17. A process as claimed in claims 1 to 16, characterized in that the surface of the shaped solidified material is modified, more particularly roughened, by mechanical and/or chemical treatment.

18. A process as claimed in claims 1 to 17, characterized in that the granular or bead-like solidifed material is briefly rolled as such.

19. The use of the shaping agglomeration process claimed in claims 1 to 18 for the production of free-flowing granular materials having average grain sizes of from 1 to 20 mm and preferably from 2 to 10 mm from a finely powdered starting material.

20. The use as claimed in claim 19, characterized in that the process is used for the agglomeration of active carbon or for the formation of porous catalysts in granular or granulate form.


**Revendications**

1. Procédé de mise en forme par agglomération de particules solides, finement divisées mélangées avec une phase liquide inerte non aqueuse en utilisant conjointement un agent liant, caractérisé en ce qu'on utilise comme agent liant au moins proportionnellement des polymères solubles dans la phase liquide contenant une teneur en groupes anhydride d'acides dicarboxyliques, que l'on traite en outre l'agent liant, la phase liquide et le solide à agglomérer en une masse déformable, et qu'on les assemble mis en forme avec des polyamines réactives par un groupe anhydride, que l'on fasse réagir au moins les polyamines avec les groupes anhydride sur la surface des composés mis en forme.

2. Procédé selon la revendication 1, caractérisé en ce que l'on introduit la masse renfermant des polymères mis en forme dans une solution de polyamines dans des solvants inertes, essentiellement anhydres, dans lequel de préférence ces solvants sont miscibles à la phase liquide inerte de la masse, contenant des polymères et en particulier sont identiques à ceux-ci pour lequel, de préférence on utilise un solvant organique polaire dans les deux ingrédients de la réaction.

3. Procédé selon les revendications 1 et 2, caractérisé en ce que l'on met en oeuvre des polymères renfermant une teneur en groupes anhydride d'acides dicarboxyliques à 5 membres en tant qu'agent liant réactif avec les amines, dans lequel les groupes anhydride d'acides dicarboxyliques représentent de préférence au moins 10% molaire, en particulier au moins environ 20% molaire de la molécule de polymère.

4. Procédé selon les revendications 1 à 3, caractérisé en ce que l'on met en oeuvre en tant qu'agent liant polymère, des copolymères d'anhydride maléique, ayant de préférence une teneur d'au moins 25% molaire en anhydride maléique, qui contiennent en particulier des éléments de structure stables à la température des co-monomères correspondants comme des a-oléfines inférieures dans le déroulement de la chaîne.

5. Procédé selon les revendications 1 à 4, caractérisé en ce que l'on met en oeuvre comme polyamines, des composés correspondants ayant des groupes amino primaires, en particulier au moins des diamines diprimaires aliphatiques et/ou aromatiques d'une manière proportionnelle, dans lesquels des mélanges de diamines aromatiques et aliphatiques peuvent obtenir une signification particulière, celles qui contiennent au moins environ 5%, en particulier de 5 à 50%, de diamines aliphatiques en poids, rapportés au mélange d'amines.

6. Procédé selon les revendications 1 à 5, caractérisé en ce que les composants polyaminés sont mis en oeuvre en solution diluée, dans laquelle la teneur en polyamine dans le solvant se situe de préférence dans la zone de 0,5 à 25% en poids et de préférence de 1 à 10% en poids rapporté à la solution de polyamine mise en oeuvre.

7. Procédé selon les revendications 1 à 6, caractérisé en ce que l'on effectue la réunion de la masse contenant des polymères, façonnée à la solution de polyamine à température ordinaire ou à des températures accrues d'une manière seulement modérée et de préférence soumet le mélange réactionnel à plusieurs phases, à une réaction ultérieure, si désiré sous agitation modérée.

8. Procédé selon les revendications 1 à 7, caractérisé en ce que l'on introduit les composants contenant des polymères façonnés dans la solution de composants polyaminés, par exemple on ajoute par fractions et ainsi on travaille avec un excès de solvant inerte tel que les composés mis en forme se présentent comme une phase dispersée dans une phase liquide formée par l'essentiel d'un solvant inerte.

9. Procédé selon les revendications 1 à 8, caractérisé en ce que les composés mis en forme solidifiés sont séparés du solvant, si désiré lavés et séchés et qu'ils sont soumis à une réaction ultérieure à des températures de préférence élevées.

10. Procédé selon les revendications 1 à 9, caractérisé en ce que la réaction ultérieure est exécutée dans des conditions dans lesquelles le solvant résiduel, l'eau de réaction et l'excès de polyamine éventuellement présent sont chassés avec formation simultanée de réticulations et ainsi une structure globale poreuse est formée, en particulier également dans les zones externes des solides de façonnage.

11. Procédé selon les revendications 1 à 10, caractérisé en ce que l'on soumet les composés mis en forme lavés et éventuellement séchés à un traitement thermique à au moins 100°C environ, qui peut être effectué aussi sous gaz inerte.

12. Procédé selon les revendications 1 à 11, caractérisé en ce que l'on traite les composés mis en forme avant le traitement thermique avec de l'ammoniac, de préférence avec une solution aqueuse diluée d'ammoniac.

13. Procédé selon les revendications 1 à 12, caractérisé en ce que l'on met en oeuvre en tant que produit insoluble à agglomérer des solides pulvérulents susceptibles de couler ou des mélanges de solides comme par exemple des composés métalliques insolubles à base de poudre de métal comme des oxydes de métal, de sulfures de métal, des sels insolubles de métaux et/ou du charbon actif.

14. Procédé selon les revendications 1 à 13, caractérisé en ce que des agents liants polymères solubles dans l'eau ayant un poids moléculaire moyen (Mn) de 500 à 5.000.000 en particulier de 1.000 à 500.000 sont mis en oeuvre pour lesquels des teneurs en solides d'agent liant polymère – rapporté à la masse déformable et à solidifier – peuvent être situées de préférence dans la zone de 1 à 20% en poids, de préférence de 2 à 10% en poids.

15. Procédé selon les revendications 1 à 14, caractérisé en ce que les suspensions de solides ayant une viscosité dans la zone de 100 à 2.000.000 de mPas sont mises en oeuvre.

16. Procédé selon les revendications 1 à 15, caractérisé en ce que l'on solidifie par mise en forme des suspensions de solides relativement fluides (viscosité préférée dans la zone allant de 100 à 4.000 mPas) par addition fractionnée dans la solution de polyamine réactive, alors que des masses à haute viscosité sont façonnées par action de forces mécaniques comme par exemple par extrusion et sont réunies avec la solution réactionnelle contenant des polyamines par exemple sont introduites dans celles-ci.

17. Procédé selon les revendications 1 à 16, caractérisé en ce que l'on modifie et en particulier que l'on granule, les surfaces des produits solidifiés façonnés par traitement mécanique et/ou chimique.

18. Procédé selon les revendications 1 à 17, caractérisé en ce que l'on roule pendant une courte période le produit granuleux ou en forme de billes pour former une masse.

19. Utilisation du procédé d'agglomération par mise en forme selon les revendications 1 à 18 pour obtenir des masses granuleuses aptes à couler ayant une taille moyenne de grains dans la zone allant de 1 à 20 mm, de préférence de 2 à 10 mm, à partir d'un matériau mis en oeuvre finement pulvérisé.

20. Utilisation selon la revendication 19, caractérisée en ce que le procédé d'agglomération de charbon actif ou de formation de masses de catalyseur poreux est mis en oeuvre en forme de grains ou de granulés.